(19) Europäisches Patentamt / European Patent Office / Office européen des brevets

(11) EP 4 460 131 A1

(12) **EUROPEAN PATENT APPLICATION**
published in accordance with Art. 153(4) EPC

(43) Date of publication:
**06.11.2024 Bulletin 2024/45**

(21) Application number: **22916708.5**

(22) Date of filing: **27.12.2022**

(51) International Patent Classification (IPC):
***H04W 72/04*** *(2023.01)* ***H04W 72/23*** *(2023.01)*
***H04W 72/12*** *(2023.01)* ***H04L 5/14*** *(2006.01)*

(52) Cooperative Patent Classification (CPC):
**H04L 5/14; H04W 72/04; H04W 72/12; H04W 72/23**

(86) International application number:
**PCT/KR2022/021419**

(87) International publication number:
**WO 2023/128567 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.12.2021 KR 20210194651**
**28.09.2022 KR 20220123739**

(71) Applicant: **LG Electronics Inc.**
**Yeongdeungpo-gu**
**Seoul 07336 (KR)**

(72) Inventors:
- **SHIM, Jaenam**
  **Seoul 06772 (KR)**
- **KO, Hyunsoo**
  **Seoul 06772 (KR)**
- **YOU, Hyangsun**
  **Seoul 06772 (KR)**

(74) Representative: **Maikowski & Ninnemann Patentanwälte Partnerschaft mbB**
**Postfach 15 09 20**
**10671 Berlin (DE)**

(54) **METHOD AND APPARATUS FOR PERFORMING UPLINK OR DOWNLINK TRANSMISSION AND RECEPTION IN WIRELESS COMMUNICATION SYSTEM**

(57) Disclosed are a method and apparatus for performing uplink or downlink transmission and reception in a wireless communication system. The method by which a terminal performs uplink or downlink transmission and reception, according to an embodiment of the present disclosure, comprises the steps of: receiving, from a base station, configuration information related to at least one bandwidth part (BWP); receiving, from the base station, first information indicating frequency domain resource allocation; and performing, on the basis of the configuration information and the first information, the uplink transmission or the downlink reception within the at least one BWP, wherein the configuration information may include second information related to an index of at least one physical resource block (PRB) that is not used for the at least one BWP or third information indicating that a discontinuous PRB duration is present on the at least one BWP.

FIG.9

RECEIVING CONFIGURATION INFORMATION RELATED TO AT LEAST ONE BWP FROM THE BASE STATION
S910
RECEIVING FIRST INFORMATION INDICATING FREQUENCY DOMAIN RESOURCE ALLOCATION FROM THE BASE STATION
S920
PERFORMING UPLINK TRANSMISSION OR DOWNLINK RECEPTION WITHIN AT LEAST ONE BWP BASED ON THE CONFIGURATION INFORMATION AND FIRST INFORMATION
S930

EP 4 460 131 A1

## Description

[TECHNICAL FIELD]

The present disclosure relates to a wireless communication system, and more specifically, to a method and device for performing uplink or downlink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception or downlink transmission and reception in a wireless communication system.

Additionally, an additional technical problem of the present disclosure is to provide a method and device for configuring and allocating frequency resources within a discontinuous BWP.

Additionally, an additional technical problem of the present disclosure is to provide a method and device for transmitting and receiving bitmap or RIV (resource indicator value)-based information for allocating/indicating frequency resources.

The technical objects to be achieved by the present disclosure are not limited to the above-described technical objects, and other technical objects which are not described herein will be clearly understood by those skilled in the pertinent art from the following description.

[Technical Solution]

In an embodiment of the present disclosure, a method for a user equipment (UE) to perform uplink transmission or downlink reception in a wireless communication system may include receiving, from a base station, configuration information related to at least one bandwidth part (BWP); receiving, from the base station, first information indicating frequency domain resource allocation; and based on the configuration information and the first information, performing the uplink transmission or the downlink reception within the at least one BWP, the configuration information may include second information related to an index of at least one physical resource block (PRB) that is not used for the at least one BWP, or third information indicating that a discontinuous PRB section exists on the at least one BWP.

In another embodiment of the present disclosure, a method of performing uplink reception or downlink transmission by a base station in a wireless communication system may include transmitting, to a user equipment (UE), configuration information related to at least one bandwidth part (BWP); transmitting, to the UE, first information indicating frequency domain resource allocation; and based on the configuration information and the first information, performing the uplink reception or the downlink transmission within the at least one BWP, and the configuration information may include second information related to an index of at least one physical resource block (PRB) that is not used for the at least one BWP, or third information indicating that a discontinuous PRB section exists on the at least one BWP.

[Technical Effects]

According to an embodiment of the present disclosure, a method and device for performing uplink transmission and reception or downlink transmission and reception in a wireless communication system may be provided.

Additionally, according to an embodiment of the present disclosure, a method and device for configuring and allocating frequency resources within a discontinuous BWP may be provided.

Additionally, according to an embodiment of the present disclosure, a method and device for transmitting and receiving bitmap or RIV (resource indicator value)-based information for allocating/indicating frequency resources may be provided.

In addition, according to an embodiment of the present disclosure, when operating a base station's subband (SB)-full duplex (FD), the user may be able to set a discontinuous or flexible BWP.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIGS. 7 and 8 illustrate a resource allocation method for downlink or uplink transmission in a wireless communication system to which the present disclosure may be applied.
FIG. 9 is a diagram for describing an uplink transmission operation or a downlink reception operation of a terminal in a wireless communication system to which the present disclosure may be applied.
FIG. 10 is a diagram for explaining an uplink reception operation or a downlink transmission operation of a base station in a wireless communication system to which the present disclosure may be applied.
FIG. 11 illustrates one or more BWP settings to which the present disclosure may be applied.
FIG. 12 illustrates frequency resource allocation information in bitmap form.
FIGS. 13, 14, 15, 16, and 17 illustrate frequency resource allocation information in bitmap form to which the present disclosure may be applied.
FIG. 18 is a diagram for describing the signaling procedure of the network side and the terminal according to an embodiment of the present disclosure.
FIG. 19 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network (5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information

- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

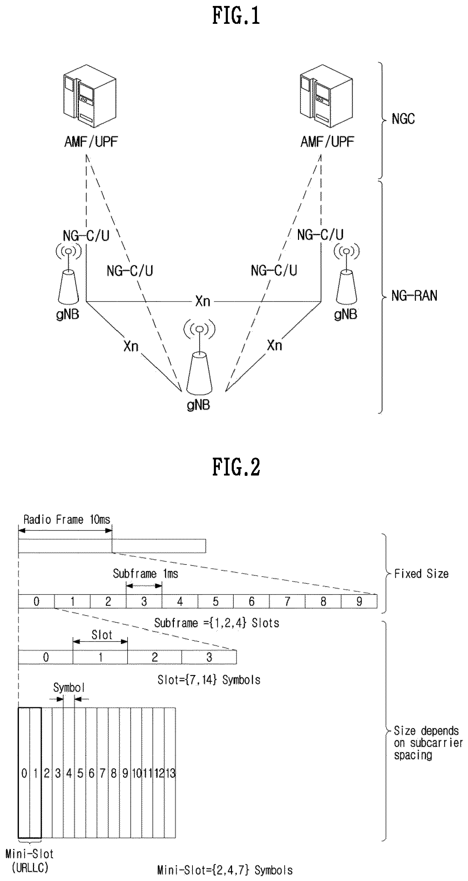

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| $\mu$ | $N_{symb}^{slot}$ | $N_{slot}^{frame,\mu}$ | $N_{slot}^{subframe,\mu}$ |
|---|---|---|---|
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

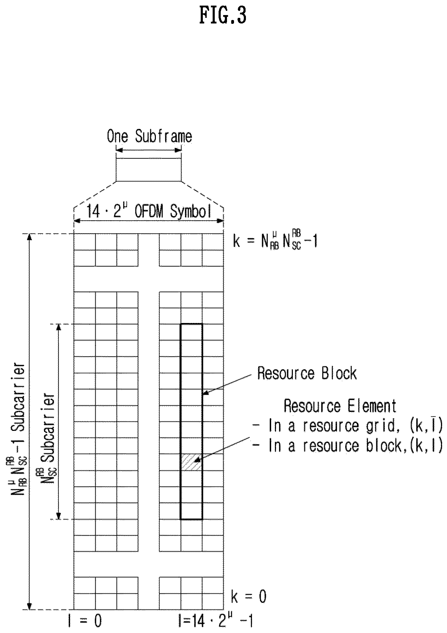

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies.

In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB}=n^{\mu}_{PRB}+N^{start,\mu}_{BWP,i}$$

$N_{BWP,i}^{start,\mu}$ is a common resource block that a BWP starts relatively to common resource block 0.

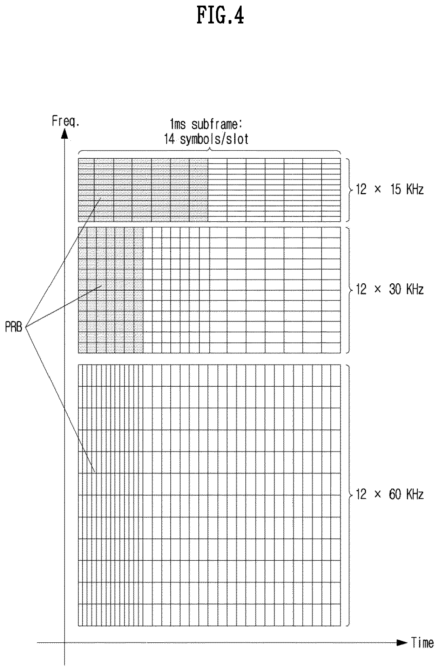

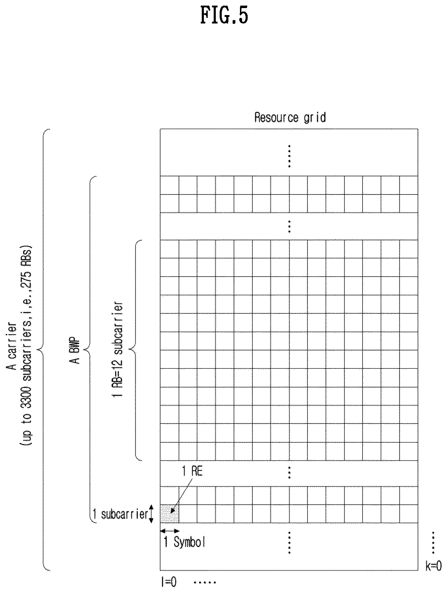

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP.

But, a configuration on a DL/UL BWP may not be received when a terminal performs an initial access procedure or before a RRC connection is set up, so a DL/UL BWP which is assumed by a terminal under these situations is defined as an initial active DL/UL BWP.

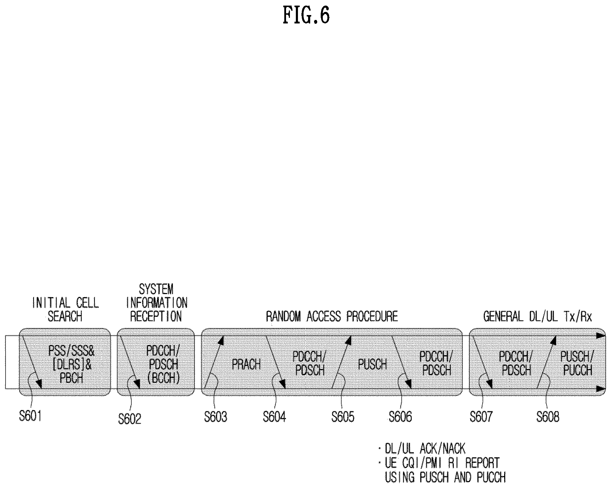

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

UE/base station operation in a full duplex radio (FDR)

scenario

In describing the present disclosure, the network may be replaced by a gNB or a centralized unit (CU)/distributed unit (DU), and the UE may be replaced by a mobile terminal (MT) of an Integrated Access and Backhaul (IAB)-node. IAB-node refers to a RAN node that supports wireless access to a terminal and backhauls access traffic wirelessly.

The present disclosure considers the FDR scenario of the base station (i.e., a scenario in which the UE transmits when the base station performs transmission and reception in the same time slot). The FDR operation of the base station may include cases where the frequency for transmission and the frequency for reception are the same, cases where each frequency is adjacent (within carrier), and cases where each frequency is different. And, the FDR operation of the base station includes cases where both transmission and reception are performed at each frequency at the same time.

In order for the base station to perform an FDR operation within the carrier, both DL resources and UL resources may be allocated at the same time. Here, it may be desirable for the UL resource to be located at the center of the frequency within the carrier to suppress adjacent channel interference (ACI) .

Here, (from the base station's perspective) it may be desirable to allocate discontinuous or flexible frequency resources to the terminal for reasons such as efficiency of resource allocation. Therefore, the BWP configuration method may be considered for allocation of discontinuous or flexible frequency resources to the terminal in the FDR scenario of the base station, and the present disclosure describes the allocation of frequency resources under the above-mentioned assumptions.

In the present disclosure, it is assumed that the cell (or/and gNB) performs both DL transmission and UL transmission in the same time resource in FD method, such as SB (sub-band)-FD (full duplex) or SS (spectrum sensing)-FD.

In addition, it may be assumed that a half-duplex (HD) operation is performed on the first time resource, and an FD operation is performed on the second time resource (i.e., the remaining time resources excluding the first time resource).

In the first time resource where the HD operation is performed, the DL or UL operation may be performed throughout the frequency resources that make up the entire system bandwidth. Within the first time resource where the HD operation is performed, the network may perform the DL operation through the 1-1 time resource and the UL operation through the 1-2 time resource. Here, the 1-1 time resource and the 1-2 time resource may not overlap with each other.

Within a second time resource where the FD operation is performed, the network may perform DL operations through all or part of the frequency resources that constitute the system bandwidth of the cell (e.g., the first frequency resource), and may perform UL operations through all or part of the frequency resources (e.g., second frequency resources).

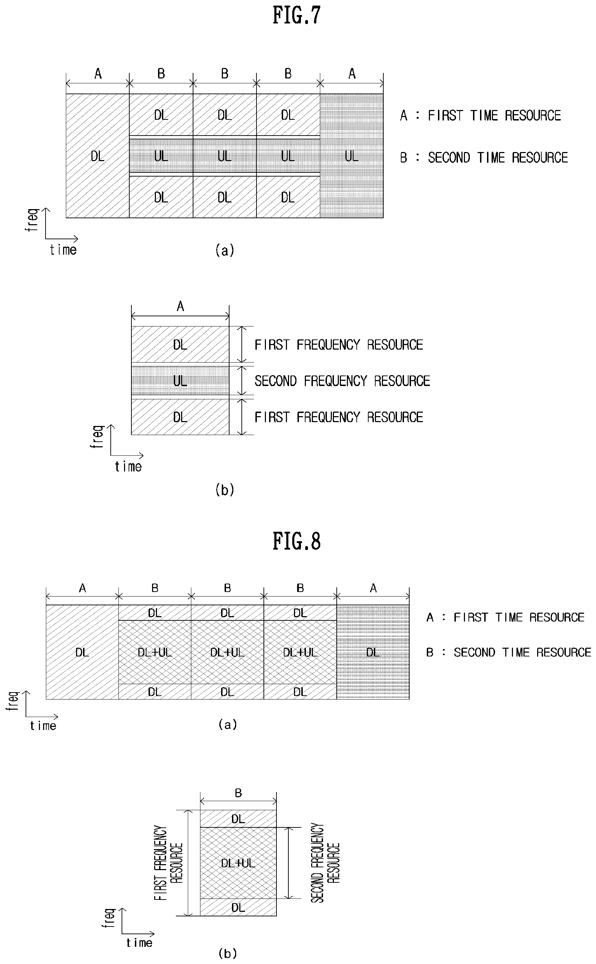

For example, as shown in (a) of FIG. 7, the time resource on which the HD operation is performed may correspond to the first time resource, and the time resource on which the SB-FD operation is performed may correspond to the second time resource. And, the time resource on which the DL operation is performed for the first time resource may correspond to the 1-1 time resource, and the time resource on which the UL operation is performed may correspond to the 1-2 time resource.

And, as shown in (b) of FIG. 7, Within the second time resource, the frequency resource on which the DL operation is performed may correspond to the first frequency resource, and the frequency resource on which the UL operation is performed may correspond to the second frequency resource.

As another example, as shown in (a) of FIG. 8, the time resource on which the HD operation is performed may correspond to the first time resource, and the time resource on which the SS-FD operation is performed may correspond to the second time resource. Additionally, the time resource on which the DL operation is performed for the first time resource may correspond to the 1-1 time resource, and the time resource on which the UL operation is performed may correspond to the 1-2 time resource.

As shown in (b) of FIG. 8, within the second time resource, the frequency resource on which the DL operation is performed may correspond to the first frequency resource, and the frequency resource on which the UL operation is performed may correspond to the second frequency resource. The frequency resource indicated as 'DL+UL' is a frequency resource on which both DL and UL operations may be performed and may correspond to both the first frequency resource and the second frequency resource.

Specifically, the first frequency resource and/or the second frequency resource may have all or part of the following characteristics.

When an SB-FD operation is performed, the first frequency resource and the second frequency resource may not overlap so that the DL resource and the UL resource are used through different frequency resources.

Here, there may be frequency resources that do not correspond to both the first and second frequency resources, and these frequency resources are called guard sub-bands or guard frequency resources. These guard frequency resources may be necessary to reduce interference from DL transmission on UL reception, and may be located between the first frequency resource and the second frequency resource.

When performing an SS-FD operation, the first frequency resource and the second frequency resource may overlap. Here, there may be frequency resources that do not correspond to both the first and second frequency resources, and these frequency resources are called guard sub-bands or guard frequency resources. These guard frequency resources may be needed to reduce interference from DL transmissions on adjacent carriers to UL reception and/or to reduce interference from DL transmissions on UL reception on adjacent carriers.

When performing an SB-FD operation, the second frequency resource may be composed of continuous frequency resources, and the first frequency resource may be composed of discontinuous frequency resources.

Here, the first frequency resource may be composed of a plurality (for example, two) sets of continuous frequency resources. The second frequency resource used for UL transmission and reception is located at the center of the frequency resources constituting the cell, thereby reducing interference from DL transmission on adjacent carriers to UL resources.

Conversely, the first frequency resource may be composed of continuous frequency resources, and the second frequency resource may be composed of discontinuous frequency resources. Here, the second frequency resource may be composed of a plurality (for example, two) sets of continuous frequency resources. By locating the second frequency resource used for DL transmission and reception at the center of the frequency resources constituting the cell, interference from DL transmission on an adjacent carrier to UL resources can be reduced.

When performing an SS-FD operation, the second frequency resource may consist of some frequency resources of the first frequency resource. Here, compared to the first frequency resource, the second frequency resource may be configured with X PRBs less for each one or both edge portions. This is to reduce interference from DL transmission on adjacent carriers to UL reception.

As described above, the network may determine/determine the 'first time resource', 'second time resource', and 'first frequency resource' and 'second frequency resource', and provide all or part of the determined information to the UE.

The network may perform DL transmission to the terminal on the '1-1 time resource within the first time resource' and 'the first frequency resource within the second time resource', and may perform UL reception from the terminal on '1-2 time resources within the first time resource' and 'second frequency resource within the second time resource'.

The UE may receive all or part of the information about the 'first time resource', 'second time resource', and 'first frequency resource' and 'second frequency resource' from the network, and may determine the location of the resource.

And, the UE may perform DL reception from the network through all or part of the '1-1 time resource in the first time resource' and the 'first frequency resource in the second time resource', and may perform UL transmission to the network on '1-2 time resources within the first time resource' and 'second frequency resource within the second time resource'.

In a wireless communication system (e.g., NR), frequency resources within the same band can be used for all DL transmission and reception or all UL transmission and reception at the same time. Therefore, the UE may determine that all resources configured for DL reception or UL transmission are available for DL reception or UL transmission, and may perform transmission and reception using the configured resources.

On the other hand, in the case of an FDR environment operating like SB-FD, SS-FD, etc. some frequency resources in the cell's time resources for DL transmission and reception may not be used for DL transmission and reception, or some frequency resources in the cell's time resources for UL transmission and reception may not be used for UL transmission and reception.

Here, the start and end points of the RBG (Resource block group) (i.e., the unit in which the UE is expected to use the same precoder or the base station is expected to use the same precoder) may be different compared to the case where all existing frequency resources consist of only DL or UL. That is, DL or UL (frequency) resources configured discontinuously in frequency may be configured.

In these cases, resources for the UE to receive the DL RS may be configured excluding resources that cannot be used for DL reception, and resources for the UE to transmit the UL RS may also be configured excluding resources that cannot be used for UL transmission. However, it may be difficult to always set the frequency resources of the RS to avoid unusable resources due to reasons such as dynamic changes in FD slots and HD slots.

Hereinafter, in order to solve the above-mentioned problem, a method of setting the frequency resources of the DL RS and UL RS in consideration of unusable frequency resources and performing RS transmission and reception by considering the corresponding frequency resources will be described.

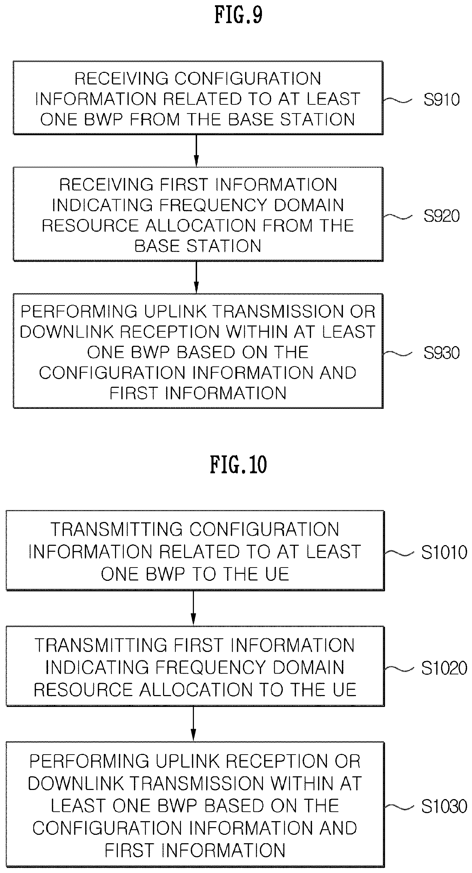

FIG. 9 is a diagram for describing an uplink transmission operation or a downlink reception operation of a UE in a wireless communication system to which the present disclosure may be applied.

The UE may receive configuration information related to at least one bandwidth part (BWP) from the base station (S910).

For example, configuration information related to BWP may include information on subcarrier spacing (SCS), frequency domain location, and bandwidth applied to BWP. The bandwidth configured by information related to the BWP may be composed of continuous RBG, but may also be composed of discontinuous RBG.

As another example, the configuration information related to may include information related to the index of at least one PRB that is not used for at least one BWP, or/and information indicating that a discontinuous PRB duration exists on at least one BWP. According to the information related to the BWP, the BWP may be composed of one or more discontinuous RBGs.

The UE may receive first information indicating frequency domain resource allocation from the base station (S920).

Here, the first information indicating frequency domain resource allocation may be received from the base station through DCI, but is not limited thereto.

As an example, (based on frequency resource allocation type 0 being configured for the UE), the first information may include a bitmap indicating a plurality of resource block groups (RBGs) consisting of at least one PRB within at least one BWP.

Here, a plurality of RBGs may be configured based on the size of at least one bandwidth, information related to the start of at least one bandwidth, and the size of a resource block group (RBG). That is, the RBG may be configured by applying the size of at least one bandwidth, information related to the start of at least one bandwidth, and the size of the RBG to the RBG mapping rule. The RBG mapping rules will be described later.

As an example of the present disclosure, based on the second information being included in the configuration information, a resource block group (RBG) may not be configured for a specific section (or a specific interval/duration) corresponding to the index of at least one PRB that is not used within at least one BWP.

As another example, based on the configuration information including the second information, for at least one BWP, a plurality of RBGs may be configured based on the size of at least one bandwidth, information related to the start of the at least one bandwidth, and the size of the RBG. Here, the plurality of RBGs may not include the first RBG composed of PRBs mapped to a specific section corresponding to the index of at least one unused PRB.

In other words, an RBG may be configured based on the size of at least one bandwidth, information related to the start of at least one bandwidth, and the size of the RBG for the remainder excluding the section in which the first RBG can be mapped within at least one bandwidth.

Additionally, a guard band may be configured for a specific section corresponding to the index of at least one unused PRB.

As another example of the present disclosure, based on the third information being included in the configuration information, the RBG may not be configured for a discontinuous PRB section on at least one BWP. Here, the index may not be mapped to at least one PRB included in the discontinuous PRB section (or interval/duration) .

As another example, based on the third information being included in the configuration information, for the at least one BWP, a plurality of RBGs may be configured based on the size of the at least one bandwidth, information related to the start of the at least one bandwidth, and the size of the RBG.

Here, the plurality of RBGs may not include a second RBG composed of a PRB that can be mapped to a discontinuous PRB section, but may include a third RBG composed of a PRB after the discontinuous PRB section. Here, the index is not mapped to the PRB included in the discontinuous RBG section among the second RBG, but the index may be mapped to other PRBs.

The UE may perform uplink transmission or downlink reception within at least one BWP based on the configuration information and first information (S930).

That is, the UE may perform uplink transmission or downlink reception through one or more RBGs indicated by the first information within at least one BWP. At this time, at least one RBG (indicated by first information) included in at least one BWP may be discontinuous.

FIG. 10 is a diagram for describing an uplink reception operation or a downlink transmission operation of a base station in a wireless communication system to which the present disclosure may be applied.

The base station may transmit configuration information related to at least one BWP (bandwidth part) to the UE (S1010).

The base station may transmit first information indicating frequency domain resource allocation to the UE (S1020).

The configuration of the RBG indicated through the BWP-related configuration information, first information, and bitmap included in the first information has been described in detail with reference to FIG. 9, so redundant description will be omitted.

The base station may perform uplink reception or downlink reception within at least one BWP based on the configuration information and the first information (S1030).

Hereinafter, the discontinuous BWP configuration method and RIV (resource indicator value)-based frequency resource allocation method will be described in detail.

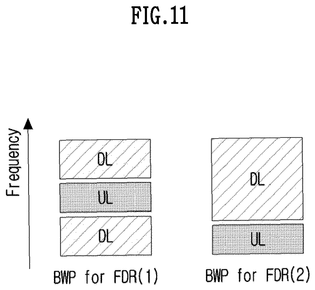

FIG. 11 shows improved BWP for gNB's FDR operation, etc. Considering that the UL subband is located in the center part, such as BWP for FDR (1) (i.e., BWP for FDR(1)), DL BWP may be set/configured as a non-contiguous PRB resource. Additionally or alternatively, it may be considered that the DL BWP and UL BWP are set to a non-overlapping structure, such as the BWP for FDR(2) .

In basic wireless communication systems, BWP is composed of contiguous PRBs, and the DL BWP and UL BWP (i.e., DL BWP and UL BWP with the same bwp-ID) that are linked to each other have the same center frequency. That is, in a basic wireless communication system, BWP cannot be configured as shown in FIG. 11. Therefore, hereinafter, a method for configuring BWP as shown in FIG. 11 will be described in detail.

In the case of the BWP for FDR(1) in FIG. 11, considering that the UL subband is located in the center, the DL BWP must be able to be configured to a non-contiguous PRB. As another example, in the BWP for FDR(1), the middle UL subband may be configured to the UL BWP and only the DL subband above the UL subband is configured to this BWP, or when trying to configure DL/UL BWP, such as BWP for FDR(2), a basic wireless communication system method may be applied.

However, in a basic wireless communication system, DL/UL BWPs that are BWP-pairs (or BWPs with the same bwp-ID) must have the same center frequency. In improved wireless communication systems, the restriction that the BWP-pair DL/UL BWP must have the same center frequency may be removed or in order to keep the centers (frequencies) of the DL BWP and UL BWP the same, some frequency resources among the set frequency resources may be configured not to configure the BWP.

Therefore, in the present disclosure, when a BWP is configured for a UE, a case is considered where there are PRB(s) that constitute a BWP but are set not to be used for a specific PRB index or those indices.

Here, unused PRB(s) constitutes a BWP, but means that the UE is not expected to transmit or receive signals/channels containing the corresponding PRB(s). Here, unused PRB(s) may be introduced to satisfy the condition of having a center frequency between BWP pairs, that is, BWPs with the same ID, or due to limitations in the transmission/reception filter configuration of the UE.

Additionally or alternatively, the UE may determine that resources for transmission and reception of signals/channels will not be allocated to the specific PRB(s). A BWP that constitutes a BWP but includes an unused PRB may be referred to as a discontinuous BWP.

Embodiment 1

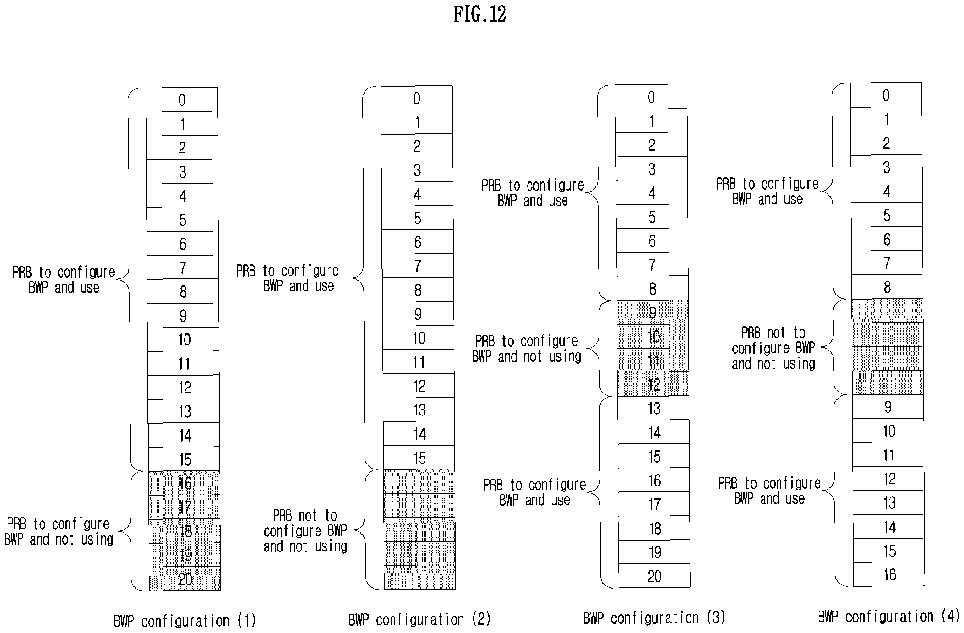

Embodiment 1 relates to a method that allows for the construction of discontinuous BWPs. FIG. 12 shows an example of the configuration of a discontinuous BWP.

BWP configuration (1) and BWP configuration (2) in FIG. 12 show a case where an unused PRB in a discontinuous BWP is located at the end of the BWP. In addition, BWP configuration (3) and BWP configuration (4) of FIG. 12 show a case where an unused PRB in a discontinuous BWP is located at a point other than both ends of the BWP or a point close to the center.

Here, for BWP configuration (1) and BWP configuration (3), The base station/UE knows the location and index of the PRB that configures the BWP but is not used, and may indicate that the base station will not use specific PRBs for the UE through signaling such as RRC/MAC-CE/DCI or in an implicit manner.

That is, the UE may determine that all PRBs in the BWP have an index and that PRBs with a specific index among all PRBs are indicated not to be used for frequency domain resource allocation.

Here, from the UE's perspective, the PRB index itself is continuous, but there may be specific groups of indexes among these PRB indexes for which resources are not expected to be allocated. Frequency resource allocation must be made based on a specific index group, etc., and the corresponding frequency resource allocation is not possible using the frequency domain resource allocation method in a basic wireless communication system.

Additionally, in the case of BWP configuration (2) and BWP configuration (4), this refers to a case where the base station does not configure a BWP and informs the UE of the location and index of an unused PRB, but the PRB does not have an index.

In other words, an unused PRB means that there is no index, and it may be referred to as an unused PRB that does not constitute a BWP.

Assume that an unused PRB exists at the end of the BWP (i.e., before the lowest PRB index or after the highest PRB index). Here, when frequency domain resource allocation is performed from the terminal's perspective, the index is continuous and the corresponding PRB is continuous, so the frequency domain resource allocation method in a basic wireless communication system may be applied.

On the other hand, in the case of BWP configuration (4) (i.e., when no BWP is configured and an unused PRB is located in the middle of the BWP), from the UE's perspective, the PRB index is continuous, but there may be non-continuous sections. A frequency domain resource allocation method that takes into account the situation of BWP configuration (4) should be applied.

A type of FDRA (frequency domain resource allocation) used/applied for each channel for the UE with the discontinuous BWP shown in FIG. 12 can be divided into i) resource allocation type 0 (Bitmap-based resource allocation method), ii) resource allocation type 1 (RIV-based resource allocation method), and iii) resource allocation type 2 (interlace-based resource allocation method).

FDRA for PDSCH transmission and reception may apply/use methods i) and ii). When performing DL transmission and reception, if a scheduling grant is received through DCI format 1_0, method i) may be assumed to be used.

As an example, assume that method i) is used/applied to PDSCH transmission and reception. Resource block allocation information may include a bitmap indicating the RBG allocated to the scheduled terminal. Here, RBG refers to a set of continuous virtual resource blocks defined by the size of the upper layer parameter 'rbg-Size' and BWP set by PDSCH-related configuration information (e.g., 'PDSCH-Config'). 'rbg-Size' refers to information for selecting between configuration 1 and configuration 2 for the RBG size of the PDSCH.

The RBG size P defined by 'rbg-Size' and the size of BWP may be defined as shown in Table 6.

[Table 6]

| BWP Size | Configuration 1 | Configuration 2 |
|---|---|---|
| 1-36 | 2 | 4 |
| 37-72 | 4 | 8 |
| 75-144 | 8 | 16 |
| 145-275 | 16 | 16 |

As another example, assume that method ii) is used/applied to PDSCH transmission and reception. Here, resource block allocation information may indicate to the scheduled terminal a set of non-interleaved or interleaved virtual resource blocks allocated contiguously within the active BWP of the PRB size, except when DCI format 1_0 is decoded in any common search space. Here, if CORESET 0 is configured for the cell, the size of CORESET 0 may be used, and if CORESET 0 is not configured for the cell, the size of the initial DL BWP may be used. Here, the type 1 resource allocation field may be composed of a Resource Indication Value (RIV) corresponding to the starting virtual resource block and the length of the continuously allocated resource block.

FDRA for PUSCH transmission and reception may be applied/used in all methods i) to iii). When performing UL transmission and reception, i) the method applies only to PUSCH when transform precoding is disabled, and method ii) and method iii) may be applied both when conversion precoding is enabled and when it is disabled.

As an example, assume that method i) is used/applied to PUSCH transmission and reception. Resource block allocation information may include a bitmap indicating the RBG allocated to the scheduled terminal. Here, RBG means a set of continuous virtual resource blocks defined by the size of the upper layer parameter 'rbg-Size' and BWP set by PUSCH-related configuration information (e.g., 'PUSCH-Config'). 'rbg-Size' refers to information for selecting between setting 1 and setting 2 for the RBG size of the PDSCH.

The RBG size P defined by 'rbg-Size' and the size of BWP may be defined as shown in Table 7.

[Table 7]

| BWP Size | Configuration 1 | Configuration 2 |
|---|---|---|
| 1-36 | 2 | 4 |
| 37-72 | 4 | 8 |
| 75-144 | 8 | 16 |
| 145-275 | 16 | 16 |

As another example, assume that method ii) is used/applied to PUSCH transmission and reception. The resource block allocation information may indicate to the scheduled UE a set of non-interleaved virtual resource blocks consecutively allocated within the active BWP of the PRB size. Here, the case where DCI format 0_0 is decoded in any common search space is excluded, in which case the size of the initial UL BWP may be used. The type 1 resource allocation field may consist of a Resource Indication Value (RIV) corresponding to the starting virtual resource block and the length of the continuously allocated resource block.

As another example, assume that method iii) is used/applied to PUSCH transmission and reception. The resource block allocation information may indicate a maximum of M interlace index sets to the UE and a maximum set of consecutive RB sets for DCI format 0_0 and DCI format 0_1 monitored in the UE-specific search space.

Interlace (or, interlace in RB units (i.e. RB-interlace)) includes RB groups spaced equally apart within a frequency band, and each RB group may include one or more (contiguous) RBs.

For example, based on the spacing of RBs constituting the RB-interlace being M (M is a natural number of 1 or more), the mth RB-interlace may be composed of {m, M+m, 2M+m, ,,, (k-1)M+m, kM+m} RB. In other words, the mth RB-interlace may be composed of RBs (i.e., unit RB groups) of the {m, M+m, 2M+m, ,,, (k-1)M+m, kM+m}th index, m may be one of {0, 1, ,,, , M-1}, and k may be a natural number greater than or equal to 1.

Physical resource blocks allocated within an active UL BWP may be mapped to virtual resource blocks.

As an example, for DCI 0_0 and DCI 0_1 monitored in a UE-specific search space, the UE may determine resource allocation in the frequency domain by the union of the resource block of the indicated interlace and the indicated RB set, and the intersection of the guard bands within the cell between the indicated RB sets.

As another example, in the case of DCI 0_0 monitored in the common search space, the UE may determine resource allocation in the frequency domain as the intersection of the resource block of the indicated interlace and the single UL RB set of the active UL BWP.

The present disclosure describes a method of allocating resources for PDSCH and PUSCH in the frequency domain when a BWP other than a continuous BWP (e.g., a discontinuous BWP or a plurality of continuous BWPs) is configured.

Embodiment 1-1

Embodiment 1-1 relates to a bitmap-based discontinuous BWP frequency domain resource allocation method.

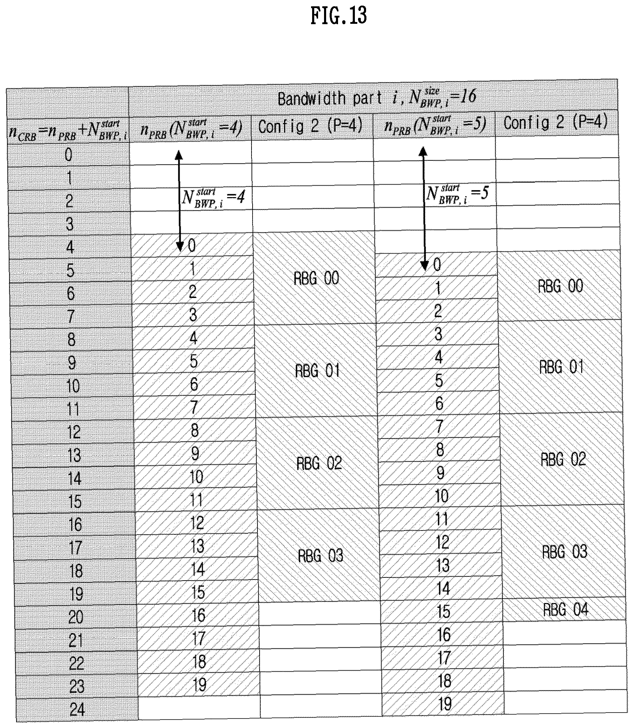

FIG. 13 shows a method of indicating FDRA based on BWP in a basic wireless communication system. Shown in FIG. 13, $N_{BWP,i}^{size}$ means the size of BWP i, $N_{BWP,i}^{start}$ means the start of BWP i, and nPRB means the number of PRBs. And, the values according to configuration 1 and configuration 2 can be defined in Table 6 and Table 7.

The total number of RBGs (NRBG) for DL/UL BWP can be defined as Equation 3.

【Equation 3】

$$N_{RBG} = \left\lceil N_{BWP,i}^{size} + (N_{BWP,i}^{start} mod\ P))/P \right\rceil$$

And, the size of the first RBG may be defined by Equation 4, and the size of the last RBG may be defined by Equation 5. The size of the remaining RBG may be P.

【Equation 4】

$$RBG_0^{size} = P - N_{BWP,i}^{start} mod\ P$$

【Equation 5】

$$RBG_{last}^{size} = (N_{BWP,i}^{start} + N_{BWP,i}^{size}) mod\ P\ if\ (N_{BWP,i}^{start} + N_{BWP,i}^{size}) mod\ P\ > 0\ and\ P\ otherwise$$

Based on the method shown in FIG. 13 and the above-mentioned equation, depending on the BWP configurations, frequency domain resources may be allocated by applying Embodiments 1-1-1 and 1-1-2, which will be described later, to consecutive single BWPs and other BWPs.

For example, as shown in FIG. 13, the RBG size (P) may be 4 and the BWP size ( $N_{BWP,i}^{size}$ ) may be 16. The leftmost column represents the CRB index, and the second and third columns represent the start RB offset value of the BWP, that is, the PRB index when $N_{BWP,i}^{size}$ is 4 and the RBG configuration at that time. The fourth and fifth columns represent the starting RB offset value of the BWP, that is, the PRB index when $N_{BWP,i}^{size}$ is 5 and the RBG configuration at that time.

According to this example, a single RBG may be formed by grouping PRBs of a specific index, and the index of the constructed RBG may be determined. A bitmap that allocates the uplink or downlink FDRA of the UE may be indicated based on the index of the corresponding RBG.

In other words, the UE may interpret the indication of the same bitmap differently depending on the method of assigning the RBG index, so ambiguities related to interpretation between the UE and the base station must be resolved.

Assume that a BWP configuration is given to the UE, such that the PRB that the base station determines may perform FDRA is discontinuous, or the actual RB is not continuous in frequency even if the PRB is continuous. Here, when bitmap-based FDRA is indicated, the interpretation of frequency resource allocation between the UE and the base station may not match. Accordingly, there is a possibility that the UE may later receive data through a frequency band that the base station does not transmit, or the terminal may transmit data through a frequency band that the base station does not receive, which may significantly degrade transmission and reception performance. Hereinafter, a frequency domain resource allocation method to solve the above-mentioned problem will be described.

In describing the examples below, parameters/formulas indicated for FDRA, such as BWP size, RBG size, and BWP start PRB, may be the same as parameters/formulas in a basic wireless communication system.

As a result, the number of RBs to which the UE expects to receive frequency resource allocation is the same, but there are differences in the location and notation of the corresponding RBs. That is, the following will assume a BWP situation including non-contiguous RBs based on configurations in a basic wireless communication system and explain the frequency resource allocation method in that case.

Embodiment 1-1-1

Embodiment 1-1-1 relates to a frequency domain resource allocation method when the base station informs the index of an unused PRB in the BWP configuration (i.e., when the PRB index of the BWP is not continuous from the UE's perspective).

In Embodiment 1-1-1, it is assumed that a discontinuous BWP is configured for the UE or a BWP that constitutes a BWP (but for some PRB resources) is configured but includes an unused PRB. The UE may know the index of a discontinuous BWP or a PRB that configures a BWP (continuous but for some PRB resources) but is not used (when allocating frequency domain resources). That is, Embodiment 1-1-1 relates to BWP configuration (1) and BWP configuration (3) in FIG. 12.

The above-described embodiment 1-1-1 assumes a case where the base station indicates all PRB indexes to the UE before the BWP configuration step or the FDRA step. Here, the base station may explicitly indicate through RRC/MAC-CE/DCI, etc. that although an index is given for some of all PRB indexes, frequency resources will not be allocated in the future. As another example, an index is given for some of all PRB indexes, but it may be promised or agreed in advance between the base station and the UE that frequency resources will not be allocated in the future.

According to Embodiment 1-1-1, since the UE knows all the indexes of unused PRBs, it may change the index of resources for which it is expected that frequency resources will not be allocated in the future. Alternatively, the UE enables or disables the indication of resources for which frequency resources are not expected to be allocated, so that instantaneous changes in frequency resource allocation are possible without updating BWP configurations, etc.

For example, to operate in TDD mode in time resources where the base station is expected to perform SB-FD or from the UE's perspective, if the time resources expected for the base station to perform SB-FD are changed to the time resources expected for the base station to perform TDD, the UE may quickly apply the FDRA method of a basic wireless communication system by determining PRB indexes to which frequency resources can be allocated for PRB indexes that are expected to not be allocated frequency resources.

In the above-described method, an index is indicated and FDRA is performed even for frequency resources for which the UE is not expected to be allocated frequency resources, so the larger the frequency resource for which the UE is not expected to be allocated, the greater the signaling overhead may be.

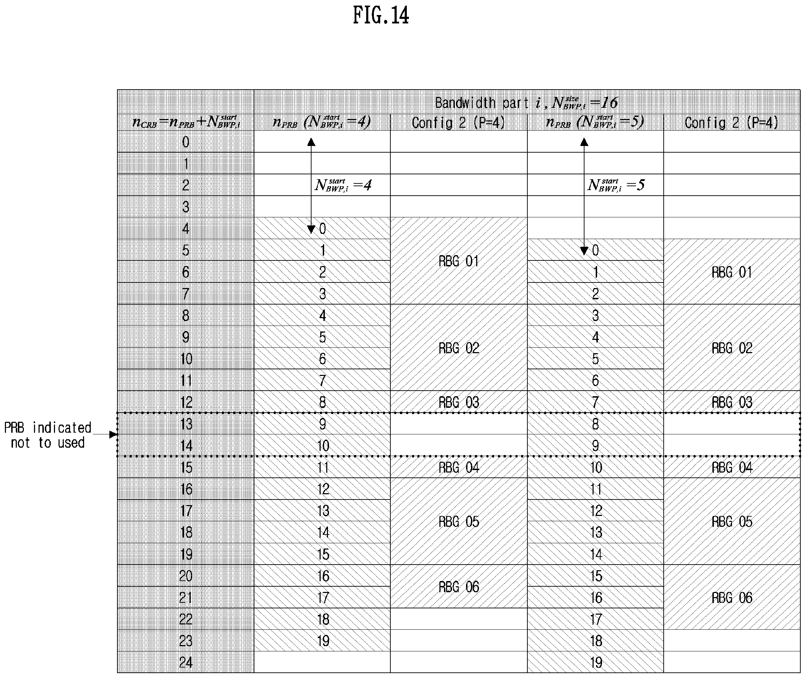

Option 1-1: As shown in FIG. 14, the UE may consider applying mapping rules/equations (e.g., Equation 4 and Equation 5) corresponding to the first RBG and the last RBG to sections (or interval/duration) where the PRB index is not continuous.

In other words, a PRB index exists, but an RBG may be configured excluding PRBs that the UE expects will not be allocated resources. Although the RBG size is assumed to be P for all except the first and last RBG, but there may be cases where the corresponding RBG size is different depending on the location of the PRB where the base station indicates that it will not allocate frequency resources to the UE or where the UE determines that frequency resources will not be allocated.

As an example, FIG. 14 shows a situation where the UE does not expect to be allocated frequency resources for CRB indexes 13 and 14 (in addition to the example in FIG. 13).

It is assumed that the base station indicates to the UE that frequency resources will not be allocated to two RBs (i.e., CRB 13 and CRB 14), in the third column (Config 2 (p=4)), in the section (or interval/duration) where the fourth RBG of size 4 (position of RBG 03 in the third column of FIG. 13) exists according to the RBG numbering method of the basic wireless communication system.

Likewise, when the UE expects that frequency resources will not be allocated, but the resources with indexes are CRB 13 and 14, the RBG grid and numbering method when start PRB, that is, $N_{BWP,i}^{size}$ is 5, is shown in the fifth column.

That is, frequency resources may be allocated to the UE based on the most RBs, excluding RBs for which frequency resources are not indicated to be allocated by option 1-1. And, in terms of configuring the RBG using all RBs to which frequency resources are expected to be allocated, option 1-1 may refer to a method of configuring/numbering the RBG using the FDRA method of a basic wireless communication system. That is, the FDRA method in the basic wireless communication system can be reused, but as may be seen in the example of FIG. 14, small-sized RBGs (RBG 03 and RBG 04) may exist.

Option 1-1 may be applied depending on the characteristics of the RB resource where it is expected that the frequency resource indicated to the UE will not be allocated. For example, when RB resources that are not expected to be assigned frequency resources indicated to the UE are indicated to be used as a guard band, option 1-1 may be applied.

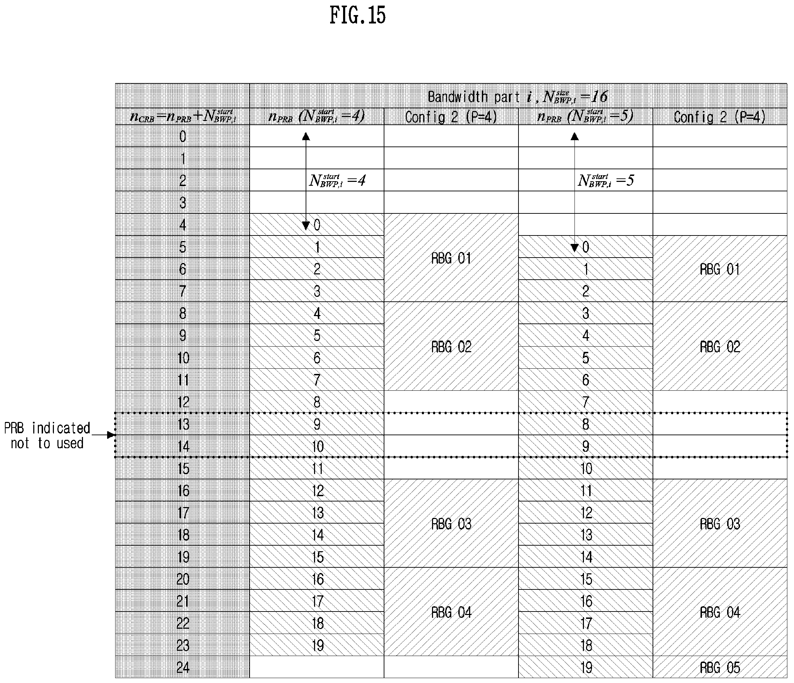

Option 1-2: as shown in FIG. 15, the UE may follow the mapping rules/equation (e.g., Equation 4 and Equation 5) of the RBG, but may not configure/allocate/set the RBG for PRBs corresponding to sections where the PRB index is discontinuous. The area where RBG is not configured/set/allocated can perform the role of a guard band, etc.

That is, a PRB index exists, but an RBG may be configured excluding PRBs that the terminal expects will not be allocated resources, and RBs whose RBG size may be smaller than the set RBG size due to the PRB.

Therefore, it may be assumed that all RBG sizes are P except the first RBG and the last RBG, identical to the RBG size in a basic wireless communication system. As an example, FIG. 15 shows (in addition to the example in FIG. 13) a situation where the UE expects that frequency resources will not be allocated for CRB indexes 13 and 14.

It is assumed that the base station indicates to the terminal that frequency resources will not be allocated to two RBs (i.e., CRB 13 and CRB 14), in the third column (Config 2 (p=4)), according to the RBG numbering method of the basic wireless communication system, in the section (or interval/duration) where the fourth RBG of size 4 (i.e., the position of RBG 03 in the third column of FIG. 13) exists. At this time, PRB index 9 and PRB index 10 may be allocated to each of the two CRBs.

In option 1-1, only RBs assigned with PRB index 9 and PRB index 10 are excluded from the configuration of the RBG, and the RBG may be grouped/assigned and numbered based on other RBs. In Option 1-2, RBGs may be grouped/assigned and numbered based on RBs excluding RBs whose RBG sizes may vary (i.e., PRB index 8 and PRB index 11).

Although it is expected that frequency resources will not be allocated equally, when the resources with the index are CRB 13 and 14, the RBG grid and numbering when $N_{BWP,i}^{size}$ is 5 are shown in the fifth column.

In other words, Option 1-2 relates to how RBGs are configured and numbered using the FDRA method in a basic wireless communication system, except for RBs where it is indicated that frequency resources will not be allocated, in terms of RBG size as the sizes of all RBGs except the first and last RBG are determined by the set RBG size.

Although it reuses the FDRA method in basic wireless communication systems, as can be seen in the example of FIG. 15, Option 1-2 is a discontinuous RBG allocation method in which the UE expects frequency resources to be allocated, but frequency resources are not allocated (i.e., not contiguous in PRB index 8 and PRB index 10).

Option 1-2 can be applied depending on the characteristics of the RB resource where it is expected that the frequency resource indicated to the UE will not be allocated. For example, if a guard band is not set for RB resources that are not expected to be allocated frequency resources indicated to the UE, option 1-2 may be applied. In such a case, the UE may determine that the PRB indexes that create discontinuity in the example of FIG. 15 (i.e., PRB index 8 and PRB index 11) are implicitly configured to the guard band.

Embodiment 1-1-2

Embodiment 1-1-2 relates to a frequency domain resource allocation method if the base station informs the UE of a section (or interval/duration) in which the PRB is expected to be discontinuous in the BWP configuration (That is, from the UE's perspective, if the PRB index of the BWP is continuous).

The method proposed in Embodiment 1-1-2 assumes that the UE configures a discontinuous BWP or a BWP (continuous but for some PRB resources) but does not include an unused PRB. In other words, for the above-mentioned discontinuous BWP or a PRB that constitutes a BWP (but for some PRB resources although it is a continuous BWP) but is not used when allocating frequency domain resources, it is assumed that the UE does not know the index of the PRB.

Additionally or alternatively, the UE may derive the above-described discontinuous BWP or a PRB that configures a BWP (but for some PRB resources) but is not used when allocating frequency domain resources, even if not directly indicated. Here, the base station may assume that the UE does not have the corresponding information. That is, Embodiment 1-1-2 describes cases corresponding to BWP configuration (2) and BWP configuration (4) in FIG. 12.

In the above-described embodiment 1-1-2, it is assumed that the base station indicates all PRB indexes to the UE before the BWP configuration step or the FDRA step. Here, the base station may explicitly indicate to the UE through RRC/MAC-CE/DCI, etc. that for a specific PRB index among all PRB indexes, the index is continuous but the actual frequency resource is not continuous.

Alternatively, the UE may perform new PRB indexing for a specific PRB index among all PRB indexes according to a prior promise or agreement that the index is continuous but the actual frequency resource is not continuous. That is, the UE may determine that for a specific PRB index, the index is continuous but the actual frequency resource is not continuous.

In the case described above, since FDRA is performed without an index being indicated for frequency resources where the UE does not expect frequency resources to be allocated, the signaling overhead required for FDRA may be small compared to Embodiment 1-1-1.

However, according to Embodiment 1-1-2, the UE may not have all indices for consecutive PRBs. Accordingly, the UE may change the index of a resource for which it is expected that no frequency resource will be allocated, or enable or disable an indication of a resource for which it is expected that the corresponding frequency resource will not be allocated. Accordingly, in order to perform an instantaneous change in frequency resource allocation, BWP configurations may need to be updated.

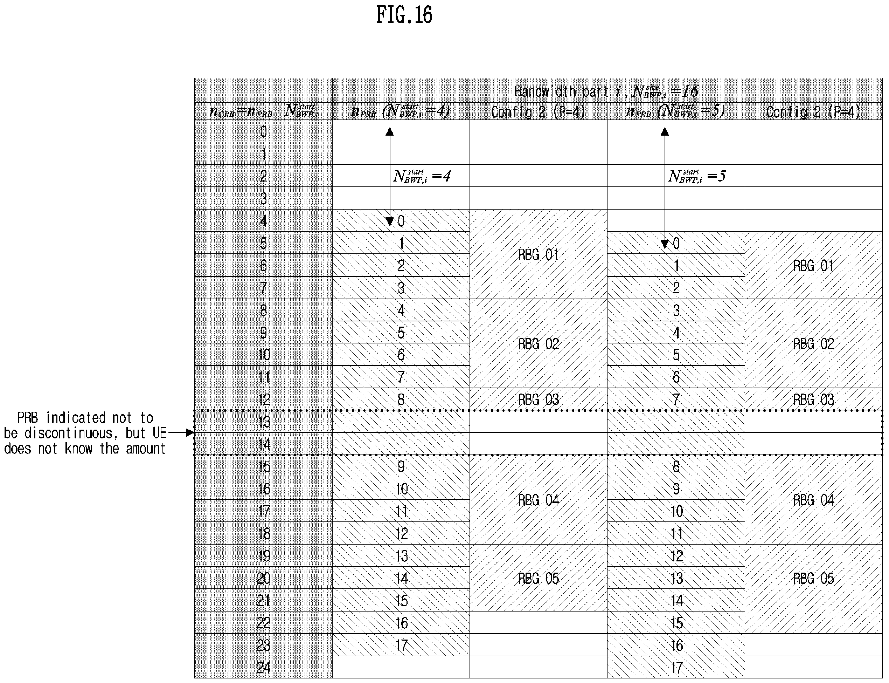

Option 2-1: As shown in FIG. 16, the RBG is configured through the RBG mapping rule before the section (or interval/duration) in which the PRB is discontinuous, and the RBG may be configured immediately/again from the section in which the PRB is discontinuous.

That is, there is no PRB index, and the RBG may be configured excluding the PRB for which the UE expects no resources will be allocated. Since the UE knows the PRB index where the PRB index is continuous but the frequency resource is not continuous, the RBG grid may be restarted based on the frequency resource with such discontinuity.

Additionally, if there is a number of RBs that do not satisfy the given RBG size at the boundary, an RBG may be configured including the corresponding RBs. That is, in a basic wireless communication system, an RBG of a different size from other RBGs may be permitted, such as a start RBG and a last RBG.

In a basic wireless communication system, it may be assumed that all RBG sizes are P except for the first RBG and the last RBG. However, it may be assumed that the base station indicates that it will not allocate frequency resources to the UE, or that the RBG size varies depending on the location of the PRB determined by the UE.

For example, FIG. 16 shows a situation in which a PRB index does not exist as the UE does not expect to be allocated frequency resources for CRB indexes 13 and 14 (in addition to the example in FIG. 13).

For example, it is assumed that the base station indicates to the UE that two RBs (i.e., CRB 13 and CRB 14) will not be allocated frequency resources, in the third column (Config 2 (p=4)), according to the RBG numbering method in the basic wireless communication system, in the section (or interval/duration) where the fourth RBG of size 4 (position of RBG 03 in the third column of FIG. 13) exists.

Here, the base station may indicate to the UE a frequency boundary to which frequency resources may be allocated for CRB index 12. The RB corresponding to CRB index 12 can form one RBG. Here, the UE may not allocate PRB index 9 and PRB index 10 to the two CRBs, and thus the two CRBs may be excluded from the configuration of the RBG.

After resources such as CRB 13 and CRB 14 where the base station indicates that frequency resources are not allocated to the UE, RBGs may be placed and numbered from immediately adjacent PRBs. Therefore, unlike the example of FIG. 13, the PRB indexes constituting RBG 04 and RBG 05 are different, and the boundaries of the RBGs may be configured differently based on non-contiguous frequency resources.

That is, in the basic wireless communication system, the PRB index corresponding to a multiple of the given RBG size became the boundary between RBGs. In option 2-1, differently, there may be a section (or interval/duration) where the PRB index is continuous but the actual frequency resource is discontinuous. The RBG may be configured by excluding discontinuous sections, and the UE may place the RBG according to the new RBG size in a section where the PRB index is continuous but the actual frequency resources are discontinuous.

When it is expected that frequency resources will not be allocated equally and the resources that do not have an index are CRB 13 and 14, the fifth column shows the RBG grid and numbering when $N_{BWP,i}^{size}$ is 5.

In Option 2-1 , unlike option 1-1, the RBG grid may vary before and after the frequency resource indicating that frequency resources will not be allocated to the UE, and this may be different from the RBG arrangement method of the UE in the basic wireless communication system. Configuring these different RBG boundaries may achieve the effect of interference randomization between uplink transmissions transmitted by different UEs.

That is, in option 2-1, frequency resources may be allocated based on the most RBs, excluding RBs for which frequency resources have been instructed that frequency resources will not be allocated to the UE. And, in terms of configuring the RBG using all RBs to which frequency resources are expected to be allocated, the RBG may be configured/numbered using the FDRA method in a basic wireless communication system. This reuses the FDRA method in the basic wireless communication system, but as may be seen in the example of FIG. 13, a small size RBG (i.e., RBG 03) may exist.

Option 2-1 may be applied depending on the characteristics of the RB resource where it is expected that the frequency resource indicated to the UE will not be allocated. For example, when a guard band, etc. is indicated for RB resources that are not expected to be assigned frequency resources indicated to the UE, option 2-1 may be applied.

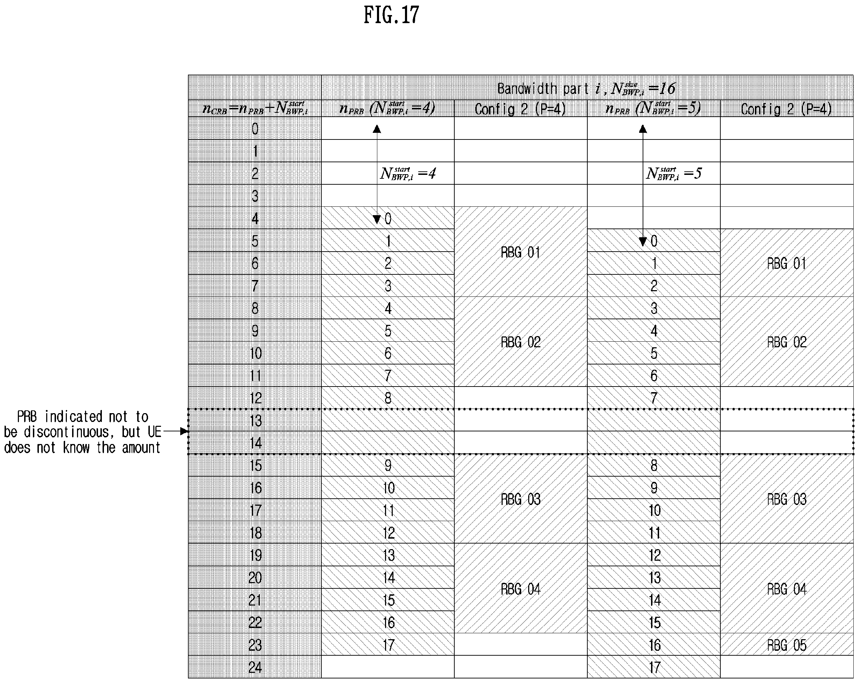

Option 2-2: As shown in FIG. 17, instead of mapping the RBG to a section in which the PRB is discontinuous, the RBG may be configured immediately after the discontinuous duration (or period/section). In other words, the RBG is not constructed using the PRB that will be included in the discontinuous section, but the RBG may be configured immediately after the discontinuous section.

In other words, a PRB index exists, but an RBG may be configured excluding PRBs that the UE expects will not be allocated resources, and RBs whose RBG size may be smaller than the (pre)configured RBG size due to the PRB. In addition, since the UE knows the PRB index where the PRB index is continuous but the frequency resource is not continuous, the RBG grid can be restarted based on the frequency resource with such discontinuity.

Therefore, it may be assumed that all RBG sizes are P except the first RBG and the last RBG, identical to the RBG size of the basic wireless communication system. As an example, FIG. 16 shows a situation in which the UE does not expect to be allocated frequency resources for CRB indexes 13 and 14 (in addition to the example in FIG. 13).

It is assumed that the base station indicates to the UE that two RBs (i.e., CRB 13 and CRB 14) will not be allocated frequency resources, in the third column (Config 2 (p=4)), in the section (or interval/duration) where the fourth RBG of size 4 (position of RBG 03 in the third column of FIG. 13) exists according to the RBG numbering method of the basic wireless communication system.

Here, the UE does not allocate PRB index 9 and PRB index 10 to the two CRBs, and PRB index 9 and PRB index 10 may be excluded from the configuration of the RBG.

After resources indicated by the base station that frequency resources will not be allocated to the UE, such as CRB 13 and CRB 14, RBGs may be placed and numbered from immediately adjacent PRBs. Therefore, unlike the example of FIG. 13, the PRB indexes constituting RBG 04 and RBG 05 are different, and the boundary of the RBG may be configured differently from the boundary in the basic wireless communication system based on the discontinuous frequency resource.

That is, in the case of a basic wireless communication system, the PRB index corresponding to a multiple of the given RBG size became the boundary between RBGs. However, in Option 2-2, the PRB index is continuous, but there is a discontinuous section (or interval/duration) in the actual frequency resource, and the RBG may be configured by excluding this.

The UE may place the RBG according to the new RBG size in a section where the PRB index is continuous but the actual frequency resources are discontinuous. If the UE expects that the same frequency resources will not be allocated and the resources that do not have an index are CRB 13 and 14, the fifth column shows the RBG grid and numbering when $N_{BWP,i}^{size}$ is 5.

In Option 2-2, unlike Option 1-2, the RBG grid may vary before and after the frequency resource indicating that frequency resources will not be allocated to the UE, which is different from the RBG placement method of the UE in a basic wireless communication system, configuring these different RBG boundaries can achieve the effect of randomizing interference between uplink transmissions transmitted by different UEs.

In other words, Option 2-2 may be numbered by configuring the RBG using the FDRA method, in a basic wireless communication system in terms of RBG size, except for the RB where the UE has been instructed that frequency resources will not be allocated, as the sizes of all RBGs except the first and last RBG are determined by the (pre)configured RBG size.

Option 2-2 may be applied depending on the characteristics of the RB resource where it is expected that the frequency resource indicated to the UE will not be allocated. For example, when a guard band, etc. is not indicated for RB resources that are not expected to be assigned frequency resources indicated to the UE, option 2-2 can be used. Here, the UE may determine that a guard band is implicitly configured for the PRB index (i.e., CRB index 12) that creates discontinuity in the example of FIG. 16.

Option 2-3: When FDRA is indicated based on a bitmap, the UE may assume that there will be no discontinuous section (or interval/duration) (i.e., no disconnected section) on the bitmap.

Unlike Option 2-1 and Option 2-2, the base station may not always allocate frequency resources along the border. Additionally, RBs without PRB index may be configured. Here, the RBG may be arranged according to the rules of the basic wireless communication system.

Embodiment 2

Embodiment 2 relates to a RIV-based frequency resource allocation method. If discontinuous BWP is allowed, when RIV-based frequency resource allocation information is indicated to the UE, the frequency resources of the UE may not be continuous.

Here, the UE may allocate/configure frequency resources using VRB-to-PRB mapping. The UE cannot assume that the same precoding is applied to separate frequency resources.

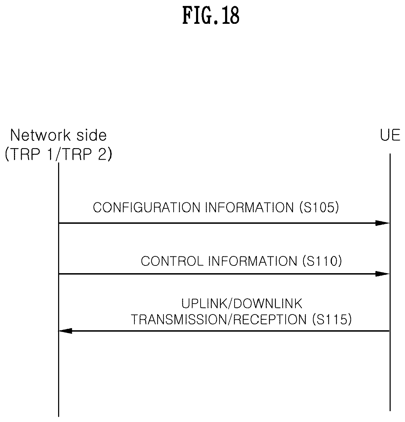

FIG. 18 is a diagram for describing the signaling procedure of the network side and the UE according to an embodiment of the present disclosure.

FIG. 18 shows an example of signaling between a network side and a terminal (UE) in a situation where the Embodiments of the present disclosure (e.g., Embodiment 1, Embodiment 1-1, Embodiment 1-1-1, Embodiment 1-1-2, Embodiment 2 or a combination of one or more of the detailed Embodiments thereof) described above can be applied.

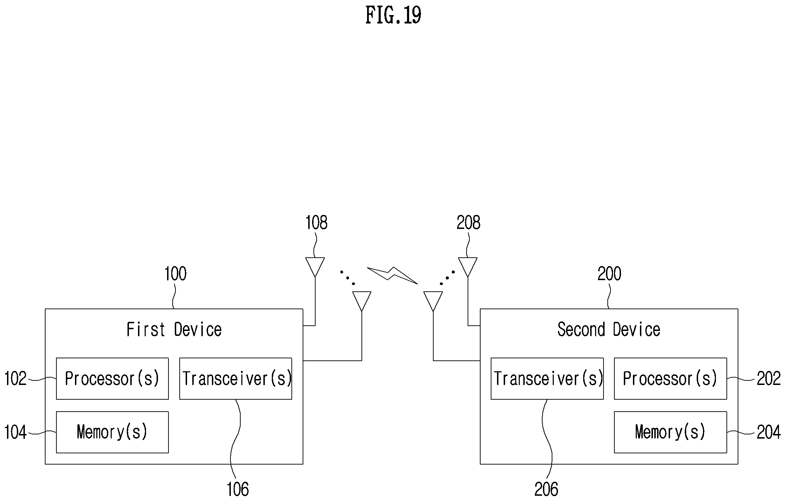

Here, the UE/network side is an example and may be replaced with various devices as described with reference to FIG. 19. FIG. 18 is for convenience of explanation and does not limit the scope of the present disclosure. Additionally, some step(s) shown in FIG. 18 may be omitted depending on the situation and/or configurations. Additionally, in the operation of the network side/UE in FIG. 18, the above-described uplink transmission and reception operation, M-TRP-related operation, etc. may be referenced or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station (gNB, etc.), etc. As described above, a TRP may be classified according to information on a CORESET group (or a CORESET pool) (e.g., a CORESET index, an ID).

In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information from the network side (S105).

For example, the configuration information may include information related to network-side configuration (i.e., TRP configuration), resource allocation information related to M-TRP-based transmission and reception, etc. The configuration information may be transmitted through a higher layer (e.g., RRC, MAC CE). The configuration information may include information related to uplink transmission based on a configured grant (CG). Additionally, if the setting information is defined or configured in advance, the corresponding step may be omitted.

As another example, the setting information may include information related to BWP. For example, information related to BWP may include information about subcarrier spacing (SCS), frequency domain location, and bandwidth applied to BWP. The bandwidth set by information related to the BWP may be composed of continuous RBG, but may also be composed of discontinuous RBG.

As another example, the information related to the BWP may include information related to the index of at least one PRB that is not used for at least one BWP, and/or information indicating that a discontinuous PRB section exists on at least one BWP. According to the information related to the BWP, the BWP may be composed of one or more discontinuous RBGs.

For example, the operation of the terminal (100 or 200 in FIG. 19) in step S105 described above receiving configuration information from the network side (200 or 100 in FIG. 19) may be implemented by the device in FIG. 19, which will be described below. For example, referring to FIG. 19, one or more processors 102 may control one or more transceivers 106 and/or one or more memories 104 to receive the configuration information, and one or more transceivers 106 may receive the configuration information from a network side.

The UE may receive DCI from the network side (S110).

DCI may include information for scheduling uplink transmission and reception or downlink transmission and reception. DCI may include frequency domain allocation information for performing uplink transmission and reception or downlink transmission and reception.

The form/configuration of frequency domain allocation information may be determined depending on the frequency resource allocation type. For example, when frequency resource allocation type 0 is configured for the UE, the frequency domain allocation information may include a bitmap indicating one or more RBGs. As another example, when frequency resource allocation type 1 is configured for the UE, the frequency domain allocation information may include the RIV corresponding to the starting virtual resource block.

For example, the operation of the UE (100 or 200 in FIG. 19) in step S110 described above receiving the control information from the network side (200 or 100 in FIG. 19) may be implemented by the device in FIG. 19, which will be described below. For example, referring to FIG. 19, one or more processors 102 may control one or more transceivers 106 and/or one or more memories 104 to receive the control information, and one or more transceivers 106 may receive the control information from a network side.

The UE may transmit uplink or receive downlink to the network (S115).

Here, uplink transmission and downlink reception performed by the UE may be performed based on scheduling information (included in DCI) within the BWP configured by configuration information.

Uplink transmission may include at least one of PUCCH or PUSCH, and downlink transmission may include at least one of PDCCH or PDSCH, but is not limited thereto.

For example, An operation in which the terminal (100 or 200 in FIG. 19) described above in step S115 transmits uplink to the network side (200 or 100 in FIG. 19) or receives downlink from the network side (200 or 100 in FIG. 19). may be implemented by the device of FIG. 19, which will be described below.

For example, referring to FIG. 19, one or more processors 102 may control one or more transceivers 106 and/or one or more memories 104, etc. to transmit uplink or receive downlink, and one or more transceivers 106 may transmit uplink or receive downlink to the network side.

## General Device to which the Present Disclosure may be applied

FIG. 19 is a diagram which illustrates a block diagram of a wireless communication system according to an embodiment of the present disclosure.

In reference to FIG. 19, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR) . A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN (personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method for a user equipment (UE) to perform uplink transmission or downlink reception in a wireless communication system, the method comprising:

   receiving, from a base station, configuration information related to at least one bandwidth part (BWP);
   receiving, from the base station, first information indicating frequency domain resource allocation; and
   based on the configuration information and the first information, performing the uplink transmission or the downlink reception within the at least one BWP,
   wherein the configuration information includes second information related to an index of at least one physical resource block (PRB) that is not used for the at least one BWP, or third information indicating that a discontinuous PRB section exists on the at least one BWP.

2. The method of claim 1, wherein:
   the first information includes a bitmap indicating a plurality of resource block groups (RBGs) consisting of at least one PRB within the at least one BWP.

3. The method of claim 2, wherein:
   the plurality of RBGs are configured based on a size of at least one bandwidth, information related to a start of the at least one bandwidth, and a size of a resource block group (RBG).

4. The method of claim 1, wherein:
   based on the second information being included in the configuration information, a resource block group (RBG) is not configured for a specific section corresponding to an index of the at least one PRB that is not used within the at least one bandwidth.

5. The method of claim 1, wherein:
   based on the configuration information including the second information:

   a plurality of RBGs are configured for the at least one BWP based on a size of the at least one bandwidth, information related to a start of the at least one bandwidth, and a size of the RBG, and
   the plurality of RBGs do not include a first RBG composed of a PRB mapped to a specific section corresponding to an index of the at least one PRB that is not used.

6. The method of claim 5, wherein:
   a guard band is configured for a specific section corresponding to the index of the at least one PRB that is not used.

7. The method of claim 1, wherein:
   based on the third information being included in the configuration information, an RBG is not configured for a discontinuous PRB section on the at least one BWP.

8. The method of claim 7, wherein:
   an index is not mapped to at least one PRB included in the discontinuous PRB section.

9. The method of claim 1, wherein:
   based on the third information being included in the configuration information:

   a plurality of RBGs are configured for the at least one BWP based on a size of the at least one bandwidth, information related to a start of the at least one bandwidth, and a size of the RBG, and
   the plurality of RBGs do not include a second RBG composed of a PRB that can be mapped to the discontinuous PRB section, and include a third RBG composed of a PRB after the discontinuous PRB section.

10. The method of claim 1, wherein:
    based on resource allocation type 1 being configured for the UE, the first information includes a Resource Indication Value (RIV) corresponding to a starting virtual resource block.

11. The method of claim 1, wherein:

the uplink transmission includes at least one of a physical uplink control channel (PUCCH) or a physical uplink shared channel (PUSCH), and
the downlink transmission includes at least one of a physical downlink control channel (PDCCH) or a physical downlink shared channel (PDSCH).

**12.** A user equipment (UE) that performs uplink transmission or downlink reception in a wireless communication system, the UE comprising:

at least one transceiver; and
at least one processor connected to the at least one transceiver,
wherein the at least one processor is configured to:

receive, from a base station through the at least one transceiver, configuration information related to at least one bandwidth part (BWP);
receive, from the base station through the at least one transceiver, first information indicating frequency domain resource allocation; and
based on the configuration information and the first information, perform the uplink transmission or the downlink reception within the at least one BWP,
wherein the configuration information includes second information related to an index of at least one physical resource block (PRB) that is not used for the at least one BWP, or third information indicating that a discontinuous PRB section exists on the at least one BWP.

**13.** A method of performing uplink reception or downlink transmission by a base station in a wireless communication system, the method comprising:

transmitting, to a user equipment (UE), configuration information related to at least one bandwidth part (BWP);
transmitting, to the UE, first information indicating frequency domain resource allocation; and
based on the configuration information and the first information, performing the uplink reception or the downlink transmission within the at least one BWP,
wherein the configuration information includes second information related to an index of at least one physical resource block (PRB) that is not used for the at least one BWP, or third information indicating that a discontinuous PRB section exists on the at least one BWP.

**14.** A base station that performs uplink reception or downlink transmission in a wireless communication system, the base station comprising:

at least one transceiver; and
at least one processor connected to the at least one transceiver,
wherein the at least one processor is configured to:

transmit, to a user equipment (UE) through the at least one transceiver, configuration information related to at least one bandwidth part (BWP);
transmit, to the UE through the at least one transceiver, first information indicating frequency domain resource allocation; and
based on the configuration information and the first information, perform the uplink reception or the downlink transmission within the at least one BWP,
wherein the configuration information includes second information related to an index of at least one physical resource block (PRB) that is not used for the at least one BWP, or third information indicating that a discontinuous PRB section exists on the at least one BWP.

**15.** A processing device configured to control a user equipment (UE) to perform uplink transmission or downlink reception in a wireless communication system, the processing device comprising:

at least one processor; and
at least one computer memory operatively coupled to the at least one processor and storing instructions for performing operations upon being executed by the at least one processor;
the operations include:

receiving, from a base station, configuration information related to at least one bandwidth part (BWP);
receiving, from the base station, first information indicating frequency domain resource allocation; and
based on the configuration information and the first information, performing the uplink transmission or the downlink reception within the at least one BWP,
wherein the configuration information includes second information related to an index of at least one physical resource block (PRB) that is not used for the at least one BWP, or third information indicating that a discontinuous PRB section exists on the at least one BWP.

**16.** At least one non-transitory computer readable medium storing at least one instruction,
based on the at least one instruction being executed by at least one processor, an apparatus for performing uplink transmission or downlink reception in a wireless communication system controls to:

receiving, from a base station, configuration information related to at least one bandwidth part (BWP);
receiving, from the base station, first information indicating frequency domain resource allocation; and
based on the configuration information and the first information, performing the uplink transmission or the downlink reception within the at least one BWP,
wherein the configuration information includes second information related to an index of at least one physical resource block (PRB) that is not used for the at least one BWP, or third information indicating that a discontinuous PRB section exists on the at least one BWP.

FIG.1

AMF/UPF
AMF/UPF
NGC
NG-C/U
NG-C/U
NG-C/U
NG-C/U
Xn
Xn
Xn
gNB
gNB
gNB
NG-RAN

FIG.2

Radio Frame 10ms
Fixed Size
Subframe 1ms
0 1 2 3 4 5 6 7 8 9
Subframe ={1,2,4} Slots
Slot
0 1 2 3
Slot={7,14} Symbols
Symbol
0 1 2 3 4 5 6 7 8 9 10 11 12 13
Size depends on subcarrier spacing
Mini-Slot (URLLC)
Mini-Slot={2,4,7} Symbols

FIG.3

One Subframe
14 · 2^μ OFDM Symbol
k = N^μ_RB N^RB_SC -1
Resource Block
Resource Element
- In a resource grid, (k,l̄)
- In a resource block,(k,l)
N^μ_RB N^RB_SC -1 Subcarrier
N^RB_SC Subcarrier
k = 0
l = 0
l=14 · 2^μ -1

FIG.4

Freq.
1ms subframe:
14 symbols/slot
12 × 15 KHz
12 × 30 KHz
PRB
12 × 60 KHz
Time

FIG.5

Resource grid
A carrier
(up to 3300 subcarriers,i,e.,275 RBs)
A BWP
1 RB=12 subcarrier
1 RE
1 subcarrier
1 Symbol
k=0
l=0

FIG.6

INITIAL CELL SEARCH
PSS/SSS& [DLRS]& PBCH
S601
SYSTEM INFORMATION RECEPTION
PDCCH/ PDSCH (BCCH)
S602
RANDOM ACCESS PROCEDURE
PRACH
S603
PDCCH/ PDSCH
S604
PUSCH
S605
PDCCH/ PDSCH
S606
GENERAL DL/UL Tx/Rx
PDCCH/ PDSCH
S607
PUSCH/ PUCCH
S608
· DL/UL ACK/NACK
· UE CQI/PMI RI REPORT
USING PUSCH AND PUCCH

FIG.7

A
B
B
B
A
DL
DL
DL
DL
UL
UL
UL
UL
DL
DL
DL
freq
time
A : FIRST TIME RESOURCE
B : SECOND TIME RESOURCE

(a)

A
DL
UL
DL
FIRST FREQUENCY RESOURCE
SECOND FREQUENCY RESOURCE
FIRST FREQUENCY RESOURCE
freq
time

(b)

FIG.8

A
B
B
B
A
DL
DL
DL
DL
DL+UL
DL+UL
DL+UL
DL
DL
DL
DL
freq
time
A : FIRST TIME RESOURCE
B : SECOND TIME RESOURCE

(a)

B
DL
DL+UL
DL
FIRST FREQUENCY RESOURCE
SECOND FREQUENCY RESOURCE
freq
time

(b)

FIG.9

RECEIVING CONFIGURATION INFORMATION RELATED TO AT LEAST ONE BWP FROM THE BASE STATION
S910
RECEIVING FIRST INFORMATION INDICATING FREQUENCY DOMAIN RESOURCE ALLOCATION FROM THE BASE STATION
S920
PERFORMING UPLINK TRANSMISSION OR DOWNLINK RECEPTION WITHIN AT LEAST ONE BWP BASED ON THE CONFIGURATION INFORMATION AND FIRST INFORMATION
S930

FIG.10

TRANSMITTING CONFIGURATION INFORMATION RELATED TO AT LEAST ONE BWP TO THE UE
S1010
TRANSMITTING FIRST INFORMATION INDICATING FREQUENCY DOMAIN RESOURCE ALLOCATION TO THE UE
S1020
PERFORMING UPLINK RECEPTION OR DOWNLINK TRANSMISSION WITHIN AT LEAST ONE BWP BASED ON THE CONFIGURATION INFORMATION AND FIRST INFORMATION
S1030

FIG.11

Frequency
DL
UL
DL
BWP for FDR(1)
DL
UL
BWP for FDR(2)

FIG.12

BWP configuration (1)
PRB to configure BWP and use
PRB to configure BWP and not using
BWP configuration (2)
PRB to configure BWP and use
PRB not to configure BWP and not using
BWP configuration (3)
PRB to configure BWP and use
PRB to configure BWP and not using
PRB to configure BWP and use
BWP configuration (4)
PRB to configure BWP and use
PRB not to configure BWP and not using
PRB to configure BWP and use

# FIG.13

| | Bandwidth part $i$, $N^{size}_{BWP,i}=16$ | | | |
|---|---|---|---|---|
| $n_{CRB}=n_{PRB}+N^{start}_{BWP,i}$ | $n_{PRB}(N^{start}_{BWP,i}=4)$ | Config 2 (P=4) | $n_{PRB}(N^{start}_{BWP,i}=5)$ | Config 2 (P=4) |
| 0 | | | | |
| 1 | | | | |
| 2 | $N^{start}_{BWP,i}=4$ | | $N^{start}_{BWP,i}=5$ | |
| 3 | | | | |
| 4 | 0 | | | |
| 5 | 1 | RBG 00 | 0 | |
| 6 | 2 | | 1 | RBG 00 |
| 7 | 3 | | 2 | |
| 8 | 4 | | 3 | |
| 9 | 5 | RBG 01 | 4 | RBG 01 |
| 10 | 6 | | 5 | |
| 11 | 7 | | 6 | |
| 12 | 8 | | 7 | |
| 13 | 9 | RBG 02 | 8 | RBG 02 |
| 14 | 10 | | 9 | |
| 15 | 11 | | 10 | |
| 16 | 12 | | 11 | |
| 17 | 13 | RBG 03 | 12 | RBG 03 |
| 18 | 14 | | 13 | |
| 19 | 15 | | 14 | |
| 20 | 16 | | 15 | RBG 04 |
| 21 | 17 | | 16 | |
| 22 | 18 | | 17 | |
| 23 | 19 | | 18 | |
| 24 | | | 19 | |

FIG.14

$n_{CRB} = n_{PRB} + N_{BWP,i}^{start}$
Bandwidth part $i$, $N_{BWP,i}^{size} = 16$
$n_{PRB}$ ($N_{BWP,i}^{start} = 4$)
$N_{BWP,i}^{start} = 4$
Config 2 (P=4)
RBG 01
RBG 02
RBG 03
RBG 04
RBG 05
RBG 06
$n_{PRB}$ ($N_{BWP,i}^{start} = 5$)
$N_{BWP,i}^{start} = 5$
Config 2 (P=4)
RBG 01
RBG 02
RBG 03
RBG 04
RBG 05
RBG 06
PRB indicated not to used

FIG.15

| $n_{CRB}=n_{PRB}+N^{start}_{BWP,i}$ | Bandwidth part $i$, $N^{size}_{BWP,i}=16$ | | | |
|---|---|---|---|---|
| | $n_{PRB}$ ($N^{start}_{BWP,i}=4$) | Config 2 (P=4) | $n_{PRB}$ ($N^{start}_{BWP,i}=5$) | Config 2 (P=4) |
| 0 | | | | |
| 1 | | | | |
| 2 | $N^{start}_{BWP,i}=4$ | | $N^{start}_{BWP,i}=5$ | |
| 3 | | | | |
| 4 | 0 | RBG 01 | | |
| 5 | 1 | | 0 | RBG 01 |
| 6 | 2 | | 1 | |
| 7 | 3 | | 2 | |
| 8 | 4 | RBG 02 | 3 | RBG 02 |
| 9 | 5 | | 4 | |
| 10 | 6 | | 5 | |
| 11 | 7 | | 6 | |
| 12 | 8 | | 7 | |
| 13 | 9 | | 8 | |
| 14 | 10 | | 9 | |
| 15 | 11 | | 10 | |
| 16 | 12 | RBG 03 | 11 | RBG 03 |
| 17 | 13 | | 12 | |
| 18 | 14 | | 13 | |
| 19 | 15 | | 14 | |
| 20 | 16 | RBG 04 | 15 | RBG 04 |
| 21 | 17 | | 16 | |
| 22 | 18 | | 17 | |
| 23 | 19 | | 18 | |
| 24 | | | 19 | RBG 05 |

PRB indicated not to used

FIG.16

$n_{CRB}=n_{PRB}+N^{start}_{BWP,i}$
Bandwidth part $i$, $N^{size}_{BWP,i}=16$
$n_{PRB}$ ($N^{start}_{BWP,i}=4$)
Config 2 (P=4)
$n_{PRB}$ ($N^{start}_{BWP,i}=5$)
Config 2 (P=4)
$N^{start}_{BWP,i}=4$
$N^{start}_{BWP,i}=5$
RBG 01
RBG 02
RBG 03
RBG 04
RBG 05
PRB indicated not to be discontinuous, but UE does not know the amount

FIG.17

| $n_{CRB}=n_{PRB}+N_{BWP,i}^{start}$ | Bandwidth part $i$, $N_{BWP,i}^{size}=16$ | | | |
|---|---|---|---|---|
| | $n_{PRB}$ ($N_{BWP,i}^{start}=4$) | Config 2 (P=4) | $n_{PRB}$ ($N_{BWP,i}^{start}=5$) | Config 2 (P=4) |
| 0 | | | | |
| 1 | | | | |
| 2 | $N_{BWP,i}^{start}=4$ | | $N_{BWP,i}^{start}=5$ | |
| 3 | | | | |
| 4 | 0 | | | |
| 5 | 1 | RBG 01 | 0 | |
| 6 | 2 | | 1 | RBG 01 |
| 7 | 3 | | 2 | |
| 8 | 4 | | 3 | |
| 9 | 5 | RBG 02 | 4 | RBG 02 |
| 10 | 6 | | 5 | |
| 11 | 7 | | 6 | |
| 12 | 8 | | 7 | |
| 13 | | | | |
| 14 | | | | |
| 15 | 9 | | 8 | |
| 16 | 10 | RBG 03 | 9 | RBG 03 |
| 17 | 11 | | 10 | |
| 18 | 12 | | 11 | |
| 19 | 13 | | 12 | |
| 20 | 14 | RBG 04 | 13 | RBG 04 |
| 21 | 15 | | 14 | |
| 22 | 16 | | 15 | |
| 23 | 17 | | 16 | RBG 05 |
| 24 | | | 17 | |

PRB indicated not to be discontinuous, but UE does not know the amount

FIG.18

Network side
(TRP 1/TRP 2)
UE
CONFIGURATION INFORMATION (S105)
CONTROL INFORMATION (S110)
UPLINK/DOWNLINK
TRANSMISSION/RECEPTION (S115)

FIG.19

100
First Device
Processor(s)
102
Memory(s)
104
Transceiver(s)
106
108
200
Second Device
Processor(s)
202
Memory(s)
204
Transceiver(s)
206
208

**INTERNATIONAL SEARCH REPORT**

International application No.
**PCT/KR2022/021419**

**A. CLASSIFICATION OF SUBJECT MATTER**

**H04W 72/04**(2009.01)i; **H04W 72/23**(2023.01)i; **H04W 72/12**(2009.01)i; **H04L 5/14**(2006.01)i

According to International Patent Classification (IPC) or to both national classification and IPC

**B. FIELDS SEARCHED**

Minimum documentation searched (classification system followed by classification symbols)

H04W 72/04(2009.01); H04L 5/00(2006.01); H04W 28/20(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: BWP configuration, frequency domain resource allocation, uplink, downlink, PRB, RBG, bitmap

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2019-0138895 A (TELEFONAKTIEBOLAGET LM ERICSSON(PUBL)) 16 December 2019 (2019-12-16)<br>See paragraphs [0010]-[0042]; and claims 13 and 24. | 1-3,10-16<br>4-9 |
| Y | KR 10-2019-0042756 A (LG ELECTRONICS INC.) 24 April 2019 (2019-04-24)<br>See paragraph [0100]; and claim 1. | 1-3,10-16 |
| A | SAMSUNG. Introduction of further enhancements on MIMO for NR. R1-2112986, 3GPP TSG RAN WG1 #107-e, e-Meeting. 08 December 2021.<br>See section 10.1. | 1-16 |
| A | US 2020-0344738 A1 (QUALCOMM INCORPORATED) 29 October 2020 (2020-10-29)<br>See paragraphs [0108]-[0109]; and claim 1. | 1-16 |
| A | US 2019-0342907 A1 (ASUSTEK COMPUTER INC.) 07 November 2019 (2019-11-07)<br>See paragraph [0526]; claim 1; and figure 5. | 1-16 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 April 2023** | **05 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/021419**

| Patent document cited in search report | Publication date (day/month/year) | Patent family member(s) | Publication date (day/month/year) |
|---|---|---|---|
| KR 10-2019-0138895 A | 16 December 2019 | CN 111919408 A | 10 November 2020 |
| | | CN 111919408 B | 10 May 2022 |
| | | CN 115134057 A | 30 September 2022 |
| | | EP 3602951 A1 | 05 February 2020 |
| | | EP 3602951 B1 | 05 May 2021 |
| | | EP 3840274 A1 | 23 June 2021 |
| | | EP 3840274 B1 | 06 July 2022 |
| | | EP 4120612 A1 | 18 January 2023 |
| | | JP 2021-508958 A | 11 March 2021 |
| | | JP 2022-003773 A | 11 January 2022 |
| | | JP 6929973 B2 | 01 September 2021 |
| | | KR 10-2104362 B1 | 24 April 2020 |
| | | US 10455582 B1 | 22 October 2019 |
| | | US 11006419 B2 | 11 May 2021 |
| | | US 2019-0306861 A1 | 03 October 2019 |
| | | US 2020-0008202 A1 | 02 January 2020 |
| | | US 2021-0212065 A1 | 08 July 2021 |
| | | WO 2019-190374 A1 | 03 October 2019 |
| KR 10-2019-0042756 A | 24 April 2019 | CN 109906651 A | 18 June 2019 |
| | | EP 3513611 A1 | 24 July 2019 |
| | | EP 3513611 B1 | 15 September 2021 |
| | | JP 2019-536343 A | 12 December 2019 |
| | | JP 6843984 B2 | 17 March 2021 |
| | | KR 10-2137826 B1 | 24 July 2020 |
| | | US 10743299 B2 | 11 August 2020 |
| | | US 11317397 B2 | 26 April 2022 |
| | | US 2019-0260530 A1 | 22 August 2019 |
| | | US 2020-0359362 A1 | 12 November 2020 |
| | | US 2022-0191844 A1 | 16 June 2022 |
| | | WO 2018-084571 A1 | 11 May 2018 |
| US 2020-0344738 A1 | 29 October 2020 | EP 3729897 A1 | 28 October 2020 |
| | | JP 2021-507624 A | 22 February 2021 |
| | | KR 10-2020-0097723 A | 19 August 2020 |
| | | US 10750492 B2 | 18 August 2020 |
| | | US 2019-0239198 A1 | 01 August 2019 |
| | | WO 2019-126247 A1 | 27 June 2019 |
| US 2019-0342907 A1 | 07 November 2019 | CN 110446269 A | 12 November 2019 |
| | | CN 110446269 B | 06 December 2022 |
| | | EP 3565172 A1 | 06 November 2019 |
| | | EP 3565172 B1 | 25 November 2020 |
| | | JP 2019-195167 A | 07 November 2019 |
| | | JP 6756001 B2 | 16 September 2020 |
| | | KR 10-2019-0127557 A | 13 November 2019 |
| | | KR 10-2206806 B1 | 25 January 2021 |

Form PCT/ISA/210 (patent family annex) (July 2022)